# EUROPEAN PATENT SPECIFICATION

(11) **EP 4 082 388 B1**
(45) Date of publication and mention of the grant of the patent: **03.06.2026**
(21) Application number: 20905298.4
(22) Date of filing: 01.12.2020
(51) Int. Cl.: A46B 1/00, A46B 5/00, A46B 9/04, A46B 3/00, C08L 75/04

(54) **TOOTHBRUSH**
ZAHNBÜRSTE
BROSSE À DENTS

(30) Priority: 23.12.2019 JP 2019231982
(43) Date of publication of application: 02.11.2022
(73) Proprietor: Lion Corporation, Tokyo 111-8644 (JP)
(72) Inventor: HATADA Satoshi, Tokyo 130-8644 (JP); TAKEUCHI Yoshikuni, Tokyo 130-8644 (JP)
(74) Representative: Ipsilon
(86) International application number: PCT/JP2020/044628
(87) International publication number: WO 2021/131526

(56) References cited:
- WO-A1-00/49911
- WO-A1-00/49911
- WO-A1-2005/039355
- WO-A1-2017/155039
- WO-A1-97/15995
- JP-A- 2003 153 741
- JP-A- 2010 194 044
- US-A- 5 564 152

## Description

### [Technical Field]

The present invention relates to a toothbrush.

### [Background Art]

An integrally molded toothbrush for manufacturing a toothbrush only by an injection molding machine has been proposed (for example, Patent Document 1). In the integrally molded toothbrush, a filament and a head base portion (or a head portion) are integrally molded, there is no need for filament material procurement and a bristle-tufting machine, and it has the advantage that it can be manufactured at a lower cost than a bristle-tufting toothbrush.

It has been proposed to provide, as an integrally molded toothbrush for brushing, an integrally molded toothbrush by separately molding a head portion (brush molded body) having a filament and an insertion hole and a handle portion provided with the insertion portion at one end thereof, and fitting the head portion and the handle portion (for example, Patent Documents 2 and 3). In the toothbrush disclosed in Patent Documents 2 and 3, since the head portion can be replaced by a user, it is expected to save resources such that only the head portion can be discarded and the handle can be used repeatedly.

### [Citation List]

### [Patent Documents]

[Patent Document 1]
   Japanese Unexamined Utility Model Application, First Publication No. S61-207233
[Patent Document 2]
   China Utility Model No. 204561298
[Patent Document 3]
   China Patent Application, Publication No. 107041792

### [Summary of Invention]

### [Technical Problem]

From the viewpoint of operability in an oral cavity, particularly operability for the back teeth, it is desired to make the head portion of the toothbrush thinner.

However, in the toothbrush in the related art as described above, it is necessary to form the insertion hole, and a ratio occupied by a resin to a thickness of the head portion is inevitably small. Therefore, when the brush molded body is made thinner, the thickness formed by the resin is further reduced, and as a result, the resin fluidity at the time of molding is decreased. In a case in which the resin fluidity at the time of molding is decreased, there is a problem that the moldability of the filament is decreased. Therefore, it is conceivable to make the insertion portion of the handle portion thinner, but in this case, there is a problem in that the resin strength of the insertion portion and the strength of the mold for molding the insertion portion cannot be secured.

Document US5564152 discloses a toothbrush an inclined portion of the head base portion, document WO 00/49911 discloses a toothbrush that can simultaneously massage the gums while brushing the teeth.

The present invention has been made in consideration of the above points and is to provide a toothbrush having exceptional operability in an oral cavity even in a case in which a brush molded body having a fitting structure is used.

### [Solution to Problem]

The present invention is directed to a toothbrush as defined by the appended claims.

In a first aspect, a toothbrush includes a handle body made of a hard resin, and a brush molded body made of a soft resin and provided on a distal end side of the handle body, in which the handle body has an insertion portion provided to protrude to the distal end side, the brush molded body has a head base portion and a filament configured to protrude to a front surface side of the head base portion, the head base portion has an insertion hole into which the insertion portion is inserted and fitted, the brush molded body has a maximum distance between a base end of the filament and a back surface of the head base portion of 2.0 mm to 4.5 mm, and when the maximum length of the head base portion in an insertion direction is defined as L1 and the maximum length of the insertion hole in the insertion direction is defined as L2, the ratio of the maximum length of the insertion hole to the maximum length of the head base portion, which is represented by L2/L1, is 0.30 to 0.70.

In addition, a distance between an end portion of the insertion hole on the distal end side and an end portion of the head base portion on the distal end side, which is represented by L1 - L2, is 5 mm to 15 mm.

In addition, the head base portion has a thin-wall region in which the distal end side of the back surface is gradually inclined to the front surface side to be gradually thinner toward the distal end side, and a maximum length of the thin-wall region in the insertion direction is 40% or more of the maximum length of the head base portion in the insertion direction.

In addition, in the toothbrush according to the aspect of the present disclosure, the insertion portion has at least one or more depressions, which are inwardly concave, at an edge in a direction orthogonal to a protrusion direction of the filament, and the head base portion has a protrusion at a position at which the head base portion is fitted into the depression when the insertion portion is inserted into the insertion hole.

In addition, in the toothbrush according to the aspect of the present disclosure, the depression is provided at an edge in a width direction orthogonal to the protrusion direction of the filament and the insertion direction, and is positioned on a rear end side with a distal end of the insertion portion in the insertion direction as an origin in a range of 30% to 70% of the maximum length of the insertion portion in the insertion direction.

In addition, in the toothbrush according to any one of the aspects of the present disclosure, the soft resin is polyurethane.

In addition, in the toothbrush according to any one of the aspects of the present disclosure, with respect to the protrusion direction of the filament, a position of the base end of the filament is the same as a position of a parting surface of the brush molded body.

### [Advantageous Effects of Invention]

The present invention can provide the toothbrush having excellent operability in the oral cavity even in a case in which the brush molded body having the fitting structure is used.

### [Brief Description of Drawings]

Fig. 1 is a front view of a toothbrush according to an embodiment of the present disclosure.
Fig. 2 is a side view of the toothbrush.
Fig. 3 is a front view of a handle body 10.
Fig. 4 is an enlarged front view of an insertion portion 12.
Fig. 5 is an enlarged side view of the insertion portion 12.
Fig. 6 is a front view of a brush molded body 20.
Fig. 7 is a cross-sectional view taken along a line A-A in Fig. 6.
Fig. 8 is a view of the brush molded body 20 as viewed from a rear end side.
Fig. 9 is a cross-sectional view of a surface parallel to an upper surface 21a including an insertion hole 22.
Fig. 10 is a cross-sectional view briefly showing an example of a mold MD for molding the brush molded body 20.
Fig. 11 is a cross-sectional view briefly showing a mold MD before mold clamping.

### [Description of Embodiments]

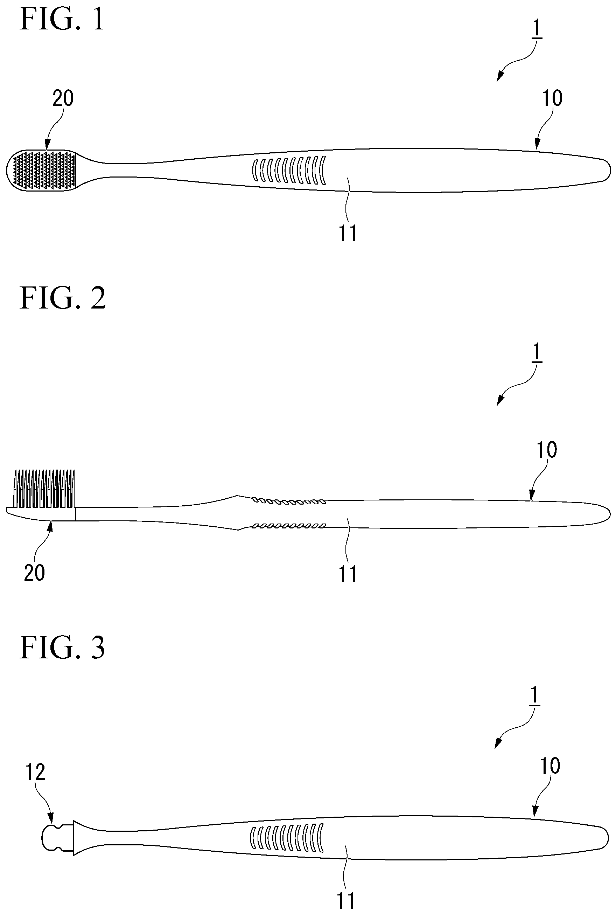

In the following, an embodiment of a toothbrush of the present disclosure will be described with reference to Figs. 1 to 11.

It should be noted that the following embodiment shows one aspect of the present invention, does not limit the present invention. In addition, in the following drawings, in order to make each configuration easy to understand, the scale or number of structures are different from that of the actual structure.

Fig. 1 is a front view of a toothbrush 1 according to the present embodiment of the present disclosure. Fig. 2 is a side view of the toothbrush 1. The toothbrush 1 has a rod-shaped handle body 10 and a brush molded body 20. The handle body 10 and the brush molded body 20 are separate members. The brush molded body 20 can be detachably attached to (inserted into) the handle body 10.

It should be noted that a front surface in the present embodiment is a side of an upper surface 21a (details will be described below) of the brush molded body 20 in a normal direction (hereinafter, simply referred to as the normal direction) on which a filament 23, which will be described below, protrudes. In addition, a direction in which the handle body 10 is inserted into the brush molded body 20 (hereinafter, simply referred to as an insertion direction), which is a length direction of a handle portion 11, is orthogonal to the normal direction. A direction orthogonal to the normal direction and the insertion direction is a width direction of the brush molded body 20 (hereinafter, simply referred to as the width direction).

Fig. 3 is a front view of the handle body 10.

As shown in Fig. 3, the handle body 10 has the rod-shaped handle portion 11 and an insertion portion 12 provided at a distal end of the handle portion 11 and protrudes to a distal end side of the handle portion 11 in the length direction. In the toothbrush 1, the insertion portion 12 of the handle body 10 is inserted into the brush molded body 20 described below, so that the insertion portion 12 is attached by being covered with the brush molded body 20.

The shape of the handle portion 11 according to the present embodiment in a front view is changed in a curvilinear manner such that the shape extends with a certain width after the width gradually narrows from the distal end side to the rear end side, and then narrows after the width gradually widens. The shape of the handle portion 11 in a front view has a substantially semicircular shape at a rear end portion.

As shown in Fig. 2, a side view shape of the handle portion 11 extends from the distal end side to the rear end side with a certain width, and then the width gradually widens to the maximum thickness of a finger rest portion. The side view shape of the handle portion 11 is changed in a curvilinear manner such that the width gradually narrows from the finger rest portion having the maximum thickness to the rear end side. The side view shape of the handle portion 11 has a substantially semicircular shape at the rear end portion.

It should be noted that, in the present invention, the shape of the handle portion is not limited to the shape of this example and can be set as appropriate in consideration of the strength, the operability, the design, and the like.

The dimension of the handle portion 11 is not particularly limited and can be set as appropriate. For example, the length of the handle portion 11 can be 100 to 200 mm.

The insertion portion 12 is a portion covered with the brush molded body 20 in a state in which the brush molded body 20 is attached to the handle body 10. The rear end of the insertion portion 12 is a rear end position of the brush molded body 20 in a state in which the brush molded body 20 is attached to the handle body 10.

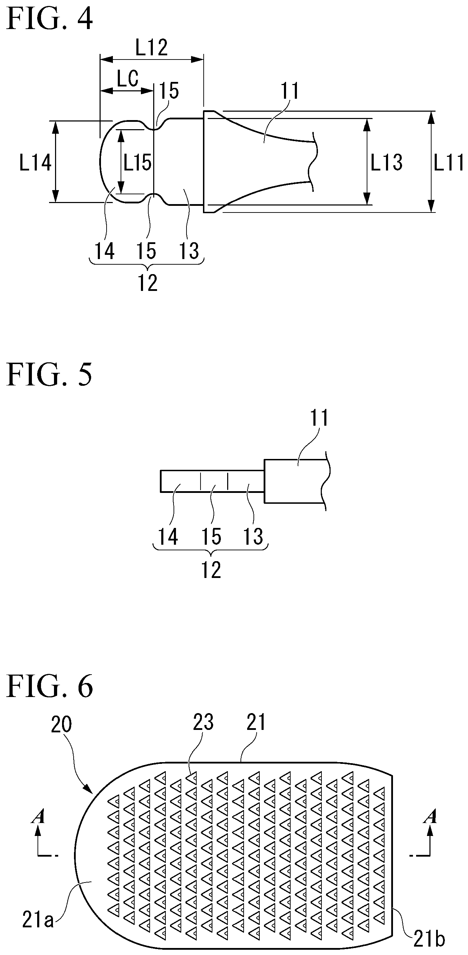

Fig. 4 is an enlarged front view of the insertion portion 12. Fig. 5 is an enlarged side view of the insertion portion 12.

As shown in Fig. 4, the insertion portion 12 has a base portion 13 provided on the distal end side of the handle portion 11 and a distal end portion 14 provided at the distal end of the base portion 13. As shown in Fig. 5, the base portion 13 and the distal end portion 14 have a step with respect to the handle portion 11 on both sides of the front surface side and the back surface side and are formed to have the same thickness thinner than the handle portion 11.

The base portion 13 has a substantially rectangular shape in a plan view. The base portion 13 has a step with respect to the handle portion 11 on both sides in the width direction, and is formed to have a width L13 narrower than a maximum width L11 on the distal end side of the handle portion 11 (L13 < L11). The distal end portion 14 has a substantially elliptical shape in a plan view with the width direction as a major axis direction. The distal end portion 14 has a shape in which side edges cut out in a straight line parallel to the insertion direction of the insertion portion 12 on both sides in the width direction having a substantially elliptical shape. The distal end portion 14 has a step with respect to the base portion 13 on both sides in the width direction, and is formed to have a width L14 narrower than the width L13 of the base portion 13.

The insertion portion 12 has a depression 15 at substantially center of the insertion direction and between the base portion 13 and the distal end portion 14. The depressions 15 are provided on both sides in the width direction. The depression 15 has an arc shape having an arc center on an outer side in the width direction and being inwardly concave. The shortest distance L15 between the depressions 15 is shorter than the width L13 of the base portion 13 and the width L14 of the distal end portion 14. The depression amount of the depression 15 in the distal end portion 14 with respect to the edge defining the width L14 is, for example, 1 mm.

The position of an apex of the depression 15, which is inwardly depressed, is preferably positioned on the rear end side with the distal end of the insertion portion 12 in the insertion direction as an origin in a range of 30% to 70% of a maximum length L12 of the insertion portion 12 in the insertion direction, and more preferably positioned in a range of 40% to 60%. Further, the entire region that forms the depression 15 is preferably positioned in a range of 30% to 70% of the maximum length L12, and more preferably positioned in a range of 40% to 60% (details will be described below). The maximum depth of the depression 15 to the inner side in the width direction (depression amount with respect to the edge defining the width L13 at the base portion 13) is preferably 0.5 mm to 1.8 mm, and more preferably 0.8 mm to 1.5 mm (details will be described below).

It is possible to strengthen the fitting between the brush molded body 20 and the handle body 10 by devising the shape of the depression 15. As the shape of the depression 15, an arc shape has been described as an exemplary example, but it may be a substantially rectangular shape, and a so-called barb may be attached to the distal end side of the insertion portion of the depression 15. The barb has a shape in which a depression direction of the depression 15 is not vertical to the inner side in the width direction but diagonally depressed to the handle portion 11.

In addition, the shape of the depression 15 that is inwardly concave on both sides of the insertion portion 12 in the width direction has been described as an exemplary example, but the shape may be a shape that is outwardly convex.

The handle body 10 is made of a hard resin.

Exemplary example of the hard resin includes a resin having a flexural modulus (JIS K7171) of 1500 MPa to 3000 MPa. Specifically, exemplary examples thereof include a polypropylene resin (PP), a polyacetal resin (POM), a polyester resin (PCTA), a polyethylene terephthalate copolymer (PETG), and high-density polyethylene (HDPE). Among these, the PP, which is a general-purpose resin, is preferable in consideration of cost.

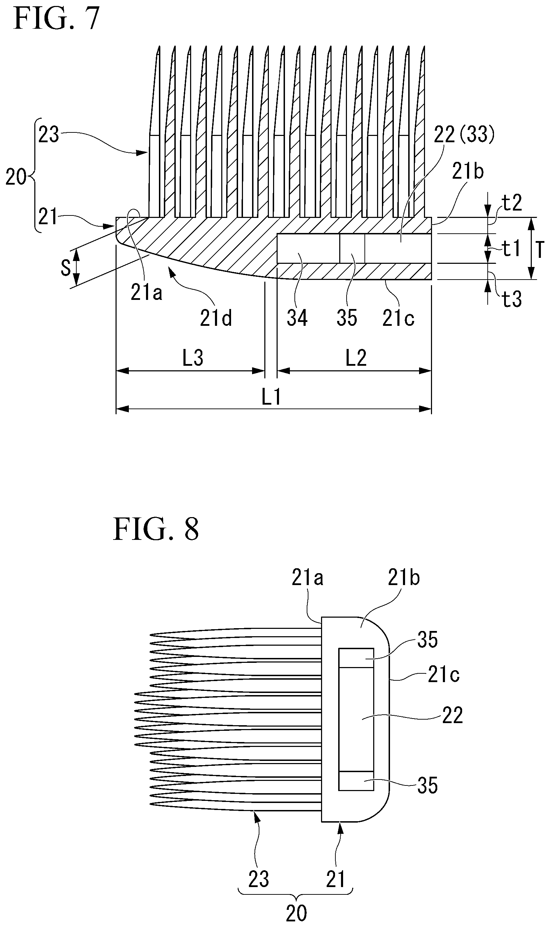

Fig. 6 is a front view of the brush molded body 20. Fig. 7 is a cross-sectional view taken along a line A-A in Fig. 6. As shown in Figs. 6 and 7, the brush molded body 20 has a head base portion 21 having a substantially rectangular shape in a front view, and a plurality of filaments 23 provided on the front surface of the head base portion 21.

The filament 23 is a substantially columnar shape protruding from the upper surface 21a of the head base portion 21 to the front surface side. The filament 23 has a substantially triangular prism shape in which the cross section of the base end side has a substantially triangular shape, and a triangular pyramid shape in which a distal end side extends from the substantially triangular prism shape and tapers.

Exemplary examples of the tapered shape of the filament 23 include a shape having one or more change points of the taper angle and having two change points of 0 to 2 mm and 4 to 8 mm from the distal end.

In addition, the filament 23 may have a quadrangular pyramid shape. Even when the filament 23 has the quadrangular pyramid shape, exemplary examples thereof include a shape having one or more change points of the taper angle and having two change points of 0 to 2 mm and 4 to 8 mm from the distal end. It is possible to improve the cleanability while securing the moldability by adopting this configuration.

The filaments 23 are provided in a plurality of rows along the insertion direction such that the rows arranged along the width direction of the brush molded body 20 are arranged such that the adjacent rows are shifted by half a pitch in the insertion direction. That is, the filaments 23 are arranged in a staggered manner.

Fig. 8 is a view of the brush molded body 20 as viewed from the rear end side.

As shown in Fig. 8, in the filament 23, the center in the width direction is high and the outer side in the width direction is low.

The filament 23 may have a flat shape with no height difference in the width direction, or the height may be reversed, the center in the width direction may be low, and the outer side in the width direction may be high. However, it is possible to improve the cleanability in the oral cavity in a case of having a dome shape in which the center in the width direction is high. The height difference of the filament is preferably 0.5 to 3.0 mm, and more preferably 0.5 to 2.0 mm.

The central region at which the filament 23 is positioned (diameter width of the base end of the filament in the width direction (maximum width of the region in the width direction at which the base end of the filament is positioned)) is preferably 20 to 45% of the length of the entire filament in the width direction, and more preferably 25 to 40%.

In addition, an arrangement pitch of the filament is preferably 0.5 to 1.5 mm in both the length direction and the width direction, and more preferably 0.8 to 1.2 mm.

The maximum length of the filament 23 is preferably 7 mm to 15 mm, and more preferably 9 mm to 13 mm. In a case in which the maximum length of the filament 23 is less than 7 mm, there is a possibility that the cleanability in the oral cavity is decreased. In a case in which the maximum length of the filament 23 exceeds 15 mm, the releasability when the brush molded body 20 is molded by injection molding is decreased. It is possible to secure the cleanability in the oral cavity and the releasability at the time of molding by setting the maximum length of the filament 23 to 7 mm to 15 mm.

A cross-sectional area of the base end of the filament 23 is preferably 0.8 mm² or less, more preferably 0.6 mm² or less, and still more preferably 0.4 mm² or less.

In a case in which the cross-sectional area of the base end of the filament 23 exceeds 0.8 mm², the filament 23 is less likely to bend, and there is a possibility that the cleanability of a gap, such as an interdental space or a cervical portion, is decreased. It is possible to secure the cleanability of the gap, such as interdental space or the cervical portion by setting the cross-sectional area of the base end of the filament 23 to 0.8 mm² or less.

A ratio of a total cross-sectional area of the base ends of the plurality of filaments 23 to the area of the upper surface 21a of the head base portion 21 is preferably 10% or more and 50% or less. In a case in which the ratio of the total cross-sectional area of the base ends of the filaments 23 is less than 10%, there is a possibility that the cleanability in the oral cavity is decreased. In a case in which the ratio of the total cross-sectional area of the base end of the filament 23 exceeds 50%, the releasability at the time of injection molding of the brush molded body 20 is decreased. It is possible to secure the cleanability in the oral cavity and the releasability at the time of molding by setting the ratio of the total cross-sectional area of the base end of the filament 23 to 10% to 50%.

As the cross-sectional shape of the filament 23, in addition to a substantially triangular shape, a substantially polygonal shape, such as a substantially quadrangle shape, a substantially circular shape, a substantially star shape, a substantially spatula shape, or the like can be selected. The filament 23 may have a configuration that extends in a straight shape, or a tapered shape tapered from the base end, in addition to a tapered shape in which the distal end tapers.

The upper surface 21a of the head base portion 21 is a plane surface parallel to the width direction and the insertion direction. The upper surface 21a is flush with the position of the base end of the filament 23 with respect to the protrusion direction of the filament 23. As shown in Figs. 6 and 8, the upper surface 21a forms an outer contour (outermost circumference) of the head base portion 21. That is, the upper surface 21a is a parting surface when the brush molded body 20 is molded by the injection molding.

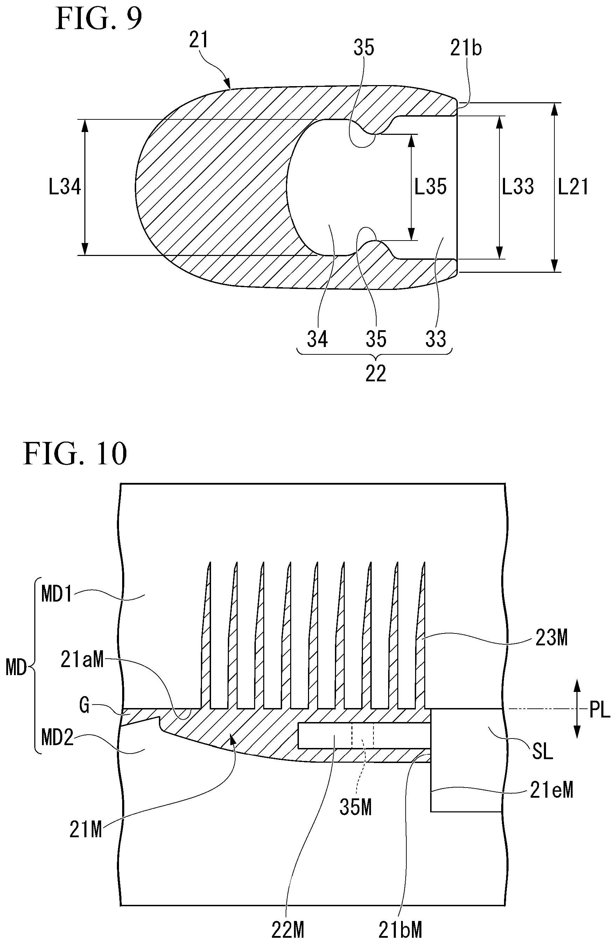

The head base portion 21 has an insertion hole 22 extending in the insertion direction and opening to an end surface 21b on the rear end side. Fig. 9 is a cross-sectional view of the surface parallel to an upper surface 21a including an insertion hole 22. As shown in Fig. 9, the insertion hole 22 has a first portion 33 that opens to the end surface 21b and a second portion 34 that is positioned behind the first portion 33. As shown in Fig. 7, the first portion 33 and the second portion 34 are formed to have the same thickness thinner than the head base portion 21.

The head base portion 21 has a protrusion 35 positioned substantially at the center of the insertion hole 22 in the insertion direction and between the first portion 33 and the second portion 34. The protrusions 35 are provided on both sides of the insertion hole 22 in the width direction. Each of the protrusion 35 is provided at a position at which the insertion portion 12 is fitted into the depression 15 when the insertion portion 12 is inserted into the insertion hole 22. The protrusion 35 has an arc shape having an arc center on the outer side in the width direction and being inwardly convex.

A maximum width L21 on the rear end side (end surface 21b) of the head base portion 21 is substantially the same as the maximum width L11 on the distal end side of the handle portion 11.

A shape of the insertion hole 22 in a front view is substantially the same as the shape of the insertion portion 12 in a front view. A width L33 of the first portion 33 is a length into which the base portion 13 can be inserted in the insertion portion 12, and is substantially the same as the maximum width L13 of the base portion 13. A width L34 of the second portion 34 is a length into which the distal end portion 14 can be inserted in the insertion portion 12 and is substantially the same as the maximum width L14 of the distal end portion 14.

The shortest distance L35 between the protrusions 35 is shorter than the width L33 of the first portion 33 and the width L34 of the second portion 34. The shortest distance L35 between the protrusions 35 is a length into which the distal end portion 14 and the depression 15 can be inserted in the insertion portion 12 and is substantially the same as the shortest distance L15 between the depressions 15. The protrusion amount of the protrusion 35 to the inner side in the width direction with respect to the second portion 34 is, for example, 1 mm. The protrusion amount of the protrusion 35 with respect to the second portion 34 is an undercut amount in a case in which the mold (slide core) for molding the insertion hole 22 at the time of injection molding of the brush molded body 20 is pulled out to the rear end side.

It should be noted that, in a case in which the handle body 10 has the barb on the distal end side of the insertion portion of the depression 15, it is possible to further strengthen the fitting between the brush molded body 20 and the handle body 10.

Returning to Fig. 7, a maximum distance (maximum thickness) T between the upper surface 21a of the head base portion 21 and a second surface 21c on the back surface side is preferably 2.0 mm to 4.5 mm. In a case in which the maximum distance T is less than 2.0 mm, a gap between the upper surface 21a and a surface of the insertion hole 22 on the upper surface 21a side, or a gap between the second surface 21c and a surface of the insertion hole 22 on the second surface 21c side is decreased, and the fluidity of the molten resin is decreased at the time of molding, so that there is a possibility of non-filling of the resin. In a case in which the maximum distance T exceeds 4.5 mm, there is a possibility that the operability when the brush molded body 20 is inserted into the oral cavity is decreased. It is possible to secure the filling property of the resin and the operability when the brush molded body 20 is inserted into the oral cavity by setting the maximum distance T to 2.0 mm to 4.5 mm .

A distance (maximum length) of the head base portion 21 in the width direction is not particularly limited, but is, for example, 10 to 16 mm. In particular, in a case in which the maximum length of the head base portion 21 in the width direction is 13 to 16 mm, it is possible to secure the operability in the oral cavity by making the head portion thin even though the head is wide.

A height t1 of the insertion hole 22 is preferably 1.0 mm or more and 2.5 mm or less. A thickness (distance) t2 of the head base portion 21 between the upper surface 21a and the surface of the insertion hole 22 on the upper surface 21a side is preferably 0.5 mm to 2.0 mm. A thickness (distance) t3 of the head base portion 21 between the second surface 21c on the back surface side of the head base portion 21 and the surface of the insertion hole 22 on the second surface 21c side is preferably 0.5 mm to 2.0 mm.

In addition, in a case in which the maximum length of the head base portion 21 in the insertion direction is defined as L1 and the maximum length of the insertion hole 22 in the insertion direction is defined as L2, a ratio of the maximum length L2 of the insertion hole 22 to the maximum length L1 of the head base portion 21, which is represented by L2/L1, is preferably 0.30 to 0.70, more preferably 0.40 to 0.60 or less, and still more preferably 0.45 to 0.55.

In a case in which the value represented by L2/L1 is less than 0.30, the region in which the insertion portion 12 made of the hard resin is not present is large, so that the front side of the brush molded body 20 is easy to bend, and there is a possibility that the usability of the toothbrush 1 is decreased. In a case in which L2/L1 exceeds 0.70, the volume occupied by the mold (slide core) molding the insertion hole 22 at the time of molding is large, and the resin flow is restricted, so that the moldability of the filament 23 is decreased. By setting the value represented by L2/L1 to 0.30 to 0.70, it is possible to suppress the decrease of the usability of the toothbrush 1 while suppressing the decrease of the moldability of the filament 23.

In addition, the distance between the end portion of the insertion hole 22 on the distal end side and the end portion of the head base portion 21 on the distal end side represented by L1 - L2 is preferably 5 mm to 15 mm, and more preferably 8 mm to 12 mm. In a case in which the value represented by L1 - L2 is less than 5 mm, the resin flow is restricted, so that the moldability of the filament 23 is decreased. In a case in which the value represented by L1 - L2 exceeds 15 mm, the region in which the insertion portion 12 made of the hard resin is not present is large, so that the front side of the brush molded body 20 is easy to bend, and there is a possibility that usability is decreased. By setting the value represented by L1 - L2 to 5 mm to 15 mm, it is possible to suppress the decrease of the usability of the toothbrush 1 while suppressing the decrease of the moldability of the filament 23.

In a case in which the maximum thickness T of the head base portion 21 in the brush molded body 20 is reduced, it is conceivable to reduce the height t1, and the thicknesses t2 and t3, but in a case in which the thicknesses t2 and t3 are reduced, it is necessary to consider the fluidity of the soft resin at the time of molding. In particular, when the thickness t2 is reduced, the moldability of the filament 23 is greatly affected. Specifically, when the thickness t2 is reduced, in the mold for molding the brush molded body 20, the cross-sectional area orthogonal to the insertion direction of a flow path of the soft resin toward the filament 23 is reduced, and molding defects, such as short circuits, is likely to occur, and the moldability of the filament 23 is decreased. Therefore, a minimum distance S between the base end of the filament 23 positioned on the most distal end side and the back surface of the head base portion 21 is preferably 1.5 mm to 3.0 mm.

A minimum thickness of the head base portion 21 is 1.0 to 2.5 mm. By setting the minimum thickness of the head base portion 21 to this range, it is possible to improve the operability in the oral cavity while reducing the discomfort when the distal end of the head portion comes into contact with the oral tissue.

Therefore, in the present embodiment, even in a case in which the thickness t2 is small, in order to improve the fluidity of the soft resin, a certain region in which the insertion hole 22 (that is, the mold (slide core) for molding the insertion hole 22) is not present is provided in the brush molded body 20 on the distal end side of the insertion hole 22. As a result, at the time of molding, the resin can flow in the region in which the slide core for molding the insertion hole 22 is not present in the mold, so that the obstacle of the resin fluidity due to the presence of the slide core is suppressed and the moldability of the filament 23 is improved. It should be noted that a gate position for filling the mold with the resin can be selected as, for example, the distal end of the head base portion 21, but is not particularly limited.

It is also possible to dispose the gate position can be disposed, for example, on the back surface or the rear end of the head base portion 21, and it is possible to avoid a problem that an uncut portion (gate mark) of the gate cut damages the oral tissue.

In addition, as described above, by providing the depression 15 in the insertion portion 12, a recess portion 35M (see Fig. 10) for molding the protrusion 35 to be fitted into the depression 15 is formed in the slide core in the normal direction. The recess portion 35M forms the flow path of the resin flow connecting the back surface side and the front surface side of the slide core in which the insertion hole 22 is molded in the mold at the time of molding. Normally, the resin flow is restricted in the region occupied by the slide core, but the moldability of the filament 23 is improved by securing the recess portion 35M for molding the protrusion 35 as the flow path of the resin flow.

In addition, as described above, the recess portion 35M of the slide core for molding the protrusion 35 is positioned in the vicinity of the center of the insertion hole 22 in the insertion direction by the depression 15 (protrusion 35) being, preferably, positioned on the rear end side with the distal end of the insertion portion 12 in the insertion direction as an origin in a range of 30% to 70% of the maximum length L12 of the insertion portion 12 in the insertion direction, and more preferably positioned in a range of 40% to 60%. In a case in which the position of the protrusion 35 is outside the above range in the insertion direction of the insertion portion 12, there is a possibility that the resin flow at the time of molding is biased and the filament 23 cannot be uniformly molded. By setting the position of the protrusion 35 within the above range in the insertion direction of the insertion portion 12, it is possible to suppress the bias of the resin flow and to uniformly mold the filament 23.

In addition, the maximum depth of the depression 15 (protrusion 35) to the inner side in the width direction (depression amount with respect to the base portion 13) is preferably 0.5 mm to 1.8 mm (more preferably, 0.8 mm to 1.5 mm). In a case in which the maximum depth of the depression 15 to the inner side in the width direction is less than 0.5 mm, the recess portion 35M is formed only on the periphery of the slide core, so that a large improvement in the resin fluidity cannot be expected, the fitting with the protrusion 35 is weak, and there is a possibility that the brush molded body 20 falls off at the time of usage of the toothbrush 1. In a case in which the maximum depth of the depression 15 to the inner side in the width direction exceeds 1.8 mm, the fitting (undercut amount) with the protrusion 35 is large, and there is possibility that the insertion portion 12 breaks at the time of mold release. By setting the maximum depth of the depression 15 to the inner side in the width direction to 0.5 mm to 1.8 mm, it is possible to improve the resin fluidity, suppress falling-off of the brush molded body 20, and suppress the breakage of the insertion portion 12.

It should be noted that, in a case in which the handle body 10 has the barb on the distal end side of the insertion portion of the depression 15, it is possible to further strengthen the fitting between the brush molded body 20 and the handle body 10.

The head base portion 21 has a thin-wall region 21d in which the distal end side of the back surface 21c is gradually inclined to the front surface side to be gradually thinner toward the distal end side. As shown in Fig. 7, a maximum length L3 of the thin-wall region 21d in the insertion direction is 40% or more of the maximum length L1 in the insertion direction of the head base portion 21, and more preferably 50% or more.

By setting the maximum length L3 of the thin-wall region 21d to 40% or more of the maximum length L1 of the head base portion 21, it is possible to reduce the volume of the brush molded body 20 on the back surface side, so that it is possible to cause the molten resin to preferentially flow on the upper surface 21a side at the time of molding, and it is possible to improve the moldability of the filament 23. This effect is more remarkable in a case in which the gate position is disposed at the distal end of the head base portion 21. In a case in which the maximum length L3 of the thin-wall region 21d is less than 40% of the maximum length L1 of the head base portion 21, there is a possibility that the improvement in the moldability is diluted. It should be noted that when the point of preventing the breakage to the soft resin at the time of fitting of the insertion portion 12 and the insertion hole 22 and at the time of usage of the toothbrush 1, it is necessary to secure the distance t3 at 0.5 mm or more of from the back surface 21c of the head base portion 21 to the back surface of the insertion portion 12.

As the soft resin forming the brush molded body 20, various elastomers can be used, but polyurethane is preferable.

The polyurethane tends to have higher tensile strength than other elastomers, such as a styrene-based or polyester-based elastomer, so that, by using the polyurethane as the soft resin, it is possible to secure the mechanical strength even though the thickness is thin, and it is possible to suppress the breakage at the time of fitting of the insertion portion 12 and the insertion hole 22 and at the time of usage of the toothbrush 1.

In polyurethane, any of 0.01 to 1.0 wt% (% by mass) C10 or higher saturated/unsaturated hydrocarbon, higher alcohol, fatty acid amide, fatty acid ester low molecular weight polyethylene, polyethylene glycol (PEG), fatty acid metal salt, long chain fatty acid, fatty acid glycerin, and silicone, or a combination thereof is compounded and functions as a lubricant and a mold release agent.

In addition, the polyurethane has a wide range of hardness that can be selected as compared with other elastomers described above, and the resin hardness can be selected in consideration of its usability (for example, bending of the distal end of the brush molded body) depending on the thickness of the brush molded body 20. The hardness of the polyurethane is preferably Shore 90A or more and 70D or less.

In a case in which the hardness of the polyurethane is softer than Shore 90A, it is easily deformed when it is formed by the thin wall, so that the fitting is weakened and the brush molded body 20 easily falls off at the time of usage of the toothbrush 1. In a case in which the hardness of the polyurethane is harder than Shore 70D, there is a possibility that pain occurs in a case in which the distal end hits the oral tissue when the back surface of the head base portion 21 is inclined. By setting the hardness of the polyurethane to Shore 90A or more and 70D or less, it is possible to suppress falling-off of the brush molded body 20 at the time of usage of the toothbrush 1 and the pain when the distal end of the head base portion 21 hits.

In addition, as the polyurethane, it is preferable to use ether-based polyurethane from the viewpoint of securing the water resistance and antibacterial property.

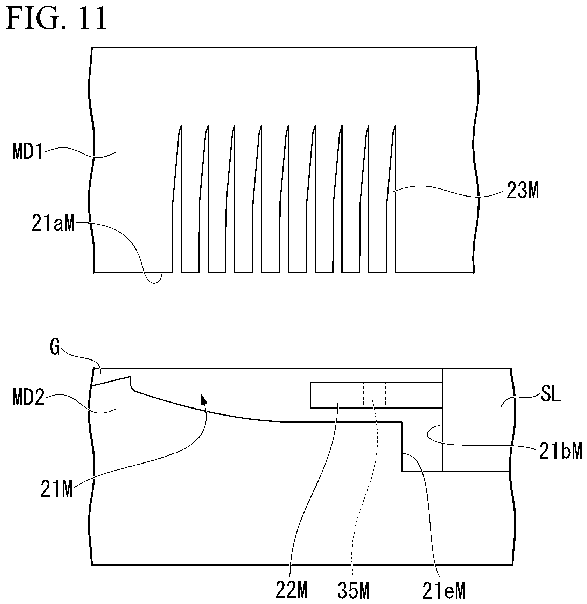

Fig. 10 is a cross-sectional view briefly showing an example of a mold MD for molding the brush molded body 20. Fig. 11 is a cross-sectional view briefly showing the mold MD before mold clamping.

The mold MD includes a first mold MD1 and a second mold MD2 that move relative to each other in an opening/closing direction (vertical direction in Fig. 10). The first mold MD1 and the second mold MD2 are molded with a parting surface PL which is flush with the upper surface 21a as a joint surface.

The first mold MD1 is attached to, for example, a fixed side of an injection molding machine and is filled with the molten resin from the injection molding machine. The second mold MD2 is attached to, for example, a movable side of the injection molding machine, and by the movement in the opening/closing direction with respect to the first mold MD1, the mold MD is also opened and closed.

The first mold MD1 has a molding surface 21aM on which the upper surface 21a is molded and a cavity 23M in which the filament 23 is molded, when the mold is mold clamped and joined to the second mold MD2.

The second mold MD2 includes a cavity 21M in which the head base portion 21 is molded when the mold is mold clamped and joined to the first mold MD1, a gate portion G that opens to the distal end side of the cavity 21M and in which the molten resin is introduced into the cavity 21M, and a contact surface 21eM that is provided at the position of the end surface 21b in the insertion direction and is orthogonal to the insertion direction. As the gate portion G, for example, although a side gate method is used, a pinpoint gate method or a tunnel gate method may be used. The contact surface 21eM extends in a direction away from the parting surface PL from the position at which the back surface of the head base portion 21 is molded in the second mold MD2.

In the second mold MD2, a slide core SL is provided. The slide core SL has a core portion 22M in which the insertion hole 22 is molded, and a molding surface 21bM on which the core portion 22M protrudes and is orthogonal to the insertion direction. As shown in Fig. 11, the molding surface 21bM is separated from the contact surface 21eM before mold clamping. As shown in Fig. 10, the slide core SL is positioned at a position at which part of the molding surface 21bM comes into contact with the contact surface 21eM and the core portion 22M is inserted into the cavity 21M, when the first mold MD1 and the second mold MD2 are mold clamped. On the molding surface 21bM, a region facing the cavity 21M without contacting the contact surface 21eM is a region for molding the end surface 21b. In addition, in the slide core SL, when the first mold MD1 and the second mold MD2 are mold opened, the core portion 22M moves in a direction away from the cavity 21M such that the core portion 22M does not bring the damage in the mold release of the molded brush molded body 20. A movement direction of the slide core SL is preferably horizontal direction in order to avoid unexpected movement due to its own weight.

As the configuration of the mold MD, forming the insertion hole 22 of the brush molded body 20 by the slide core SL has been described as an exemplary example, but a manufacturing method in which the handle body 10 is inserted into the mold MD and the brush molded body 20 is secondarily molded can also be selected. In that case, it is disadvantageous to make the brush molded body 20 and the handle body 10 detachable, but the post-process of fitting the handle body 10 and the brush molded body 20 after molding can be omitted.

Since the back surface on the distal end side of the slide core SL is close to the inclined back surface of the head base portion 21, by performing an R chamfering process or a C chamfering process, it is possible to prevent breakage of the head base portion 21 (tearing of the resin) when the slide core SL is detached or when the handle body 10 is fitted into the insertion portion 12. A dimension of the R chamfering process or the C chamfering process is preferably 1.5 mm or more, and more preferably 3.0 mm or more.

In the mold MD, in the molten resin introduced into the cavity 21M from the gate portion G in a state in which the first mold MD1 and the second mold MD2 are mold clamped, by securing the sufficient volume on the distal end side of the core portion 22M in the cavity 21M and making the back surface side be inclined and be thinner on the distal end side of the cavity 21M, it is possible to cause the molten resin introduced into the distal end side of the cavity 21M to preferentially flow on the upper surface 21a side, and it is possible to fill the cavity 23M with the molten resin with sufficient filling pressure.

In addition, in the cavity 21M, the molten resin introduced into the back surface side of the core portion 22M can flow to the front surface side using the recess portion 35M formed in the vicinity of the center of the core portion 22M in the insertion direction as the flow path, so that it is possible to uniformly mold the filament 23 in a state in which the bias of the resin flow in the insertion direction is suppressed.

As described above, in the toothbrush 1 according to the present embodiment, even in a case in which the thickness of the head base portion 21 is made thin to 2.0 mm to 4.5 mm by using the brush molded body 20 having the fitting structure, it is possible to mold the brush molded body 20 without decreasing the resin fluidity and to provide the toothbrush 1 exceptional in the operability in the oral cavity.

### [Examples]

In the following, although the present invention will be described in detail with reference to Examples, the present invention is not limited to following Examples.

### (Examples 1 to 7, and Comparative Examples 1 and 2)

According to the specifications shown in [Table 1], the toothbrushes in which at least one the maximum distance between the base end of the filament and the back surface of the head base portion described above; T, the minimum distance between the base end of the filament and the back surface of the head base portion; S, the height of the insertion hole; t1, the maximum length of the head base portion; L1, the maximum length of the insertion hole; L2, the ratio of the maximum length L2 of the insertion hole to the maximum length L1 of the head base portion; L2/L1, the difference between the maximum length L1 of the head base portion and the maximum length L2 of the insertion hole; L1 - L2, the maximum length of the thin-wall region; L3, the ratio of the maximum length L3 to the maximum length L1; L3/L1, the presence or absence of the depression, the position of the depression with the distal end of the insertion portion as an origin; LC, and the ratio of the position LC of the depression to the maximum length L12 (maximum length L2 of the insertion hole) of the insertion portion 12 in the insertion direction; LC/L12 (LC/L2) is different were used as samples of Examples 1 to 7, and Comparative Examples 1 and 2. The resin forming each sample was polyurethane.

### [Evaluation Method]

Each sample of Examples 1 to 7 and Comparative Examples 1 and 2 was evaluated regarding each of the moldability of the filament, the difficulty of bending the brush molded body, and the ease of brushing the entire oral cavity.

### (1) Evaluation Method of Moldability of Filament

Under the same conditions, five brush molded bodies molded were evaluated according to the following criteria.
5 points: The defect in appearance was not observed at all.
4 points: The distal end of the filament was deformed at the time of mold release (since the pressure is not sufficiently applied, it bends due to the external force at the time of mold release).
3 points: The thickness of the distal end of the filament was thinner than a design value.
2 points: The length of the filament was shorter than the design value (all filaments are more than half of the entire length).
1 point: The length of the filament was shorter than the design value (there is a filament less than half of the entire length).

Moreover, an average value of the five evaluation points was obtained, and the evaluation was performed according to the following four stages.
A: It was 4.5 to 5.0 points.
B: It was 3.5 or more and less than 4.5 points.
C: It was 2.5 or more and less than 3.5 points.
D: It was less than 2.5 points.

### (2) Evaluation Method of Difficulty of Bending Brush Molded Body

Sensory evaluation was performed by 10 expert panelists, and the difficulty of bending the front side of the brush molded body at the time of brushing was evaluated according to the following criteria.
5 points: It was very difficult to bend.
4 points: It was slightly difficult to bend.
3 points: It was neither difficult nor easy to bend.
2 points: It was slightly easy to bend.
1 point: It was very easy to bend.

Moreover, an average value of the evaluation points by 10 expert panelists was obtained, and the evaluation was performed according to the following four stages.
A: It was 4.5 or more and 5.0 points or less.
B: It was 3.5 or more and less than 4.5 points.
C: It was 2.5 or more and less than 3.5 points.
D: It was less than 2.5 points.

### (3) Evaluation Method of Ease of Brushing Entire Oral Cavity

Sensory evaluation was performed by 10 expert panelists, and the ease of brushing the entire oral cavity at the time of brushing (particularly, the ease of brushing the back teeth was emphasized) was evaluated according to the following criteria.
5 points: It was significantly easy to brush.
4 points: It was slightly easy to brush.
3 points: It was neither difficult nor easy to bend.
2 points: It was slightly difficult to brush.
1 point: It was significantly difficult to brush.

Moreover, an average value of the evaluation points by 10 expert panelists was obtained, and the evaluation was performed according to the following four stages.
A: It was 4.5 or more and 5.0 points or less.
B: It was 3.5 or more and less than 4.5 points.
C: It was 2.5 or more and less than 3.5 points.
D: It was less than 2.5 points.

**[Table 1]**

| Item | Example 1 | Example 2 | Example 3 | Example 4 | Example 5 | Example 6 | Example 7 | Comparative Example 1 | Comparative Example 2 |
|---|---|---|---|---|---|---|---|---|---|
| Maximum distance between base end of filament and back surface of head base portion; T (mm) | 4.0 | 4.0 | 4.0 | 4.0 | 4.0 | 4.0 | 4.0 | 4.0 | 4.0 |
| Minimum distance between base end of filament and back surface of head base portion; S (mm) | 2.0 | 2.0 | 2.0 | 4.0 | 2.2 | 2.0 | 2.0 | 2.0 | 2.0 |
| Height of insertion hole; t1 (mm) | 2.1 | 2.1 | 2.1 | 2.1 | 2.1 | 2.1 | 2.1 | 2.1 | 2.1 |
| Maximum length of head base portion; L1 (mm) | 20.3 | 20.3 | 20.3 | 20.3 | 20.3 | 20.3 | 20.3 | 20.3 | 20.3 |
| Maximum length of insertion hole; L2 (mm) | 10.0 | 6.2 | 12.4 | 10.0 | 10.0 | 10.0 | 10.0 | 5.2 | 14.5 |
| L2/L1 | 0.49 | 0.31 | 0.61 | 0.49 | 0.49 | 0.49 | 0.49 | 0.26 | 0.71 |
| L1 -L2 | 10.3 | 14.1 | 7.9 | 10.3 | 10.3 | 10.3 | 10.3 | 15.1 | 5.8 |
| Maximum length of thin-wall region; L3 (mm) | 12.5 | 12.5 | 12.5 | 0.0 | 7.5 | 12.5 | 12.5 | 12.5 | 12.5 |
| (L3/L1) × 100 (%) | 62 | 62 | 62 | 0 | 37 | 62 | 62 | 62 | 62 |
| Presence of depression | Presence | Presence | Presence | Presence | Presence | Presence | Presence | Presence | Presence |
| Position of depression with distal end of insertion portion as origin; LC (mm) | 5.2 | 3.1 | 6.2 | 5.2 | 5.2 | 2.8 | 7.2 | 2.6 | 7.3 |
| (LC/L12) × 100 (%) | 52 | 50 | 50 | 52 | 52 | 28 | 72 | 50 | 50 |
| ((LC/L2) × 100 (%)) | | | | | | | | | |
| Resin | polyurethane | polyurethane | polyurethane | polyurethane | polyurethane | polyurethane | polyurethane | polyurethane | polyurethane |
| Moldability of filament | A | A | B | B | B | B | B | A | C |
| Difficulty of bending of brush molded body | A | B | A | A | A | A | A | C | A |
| Ease of brushing entire oral cavity | A | B | A | B | B | A | A | B | A |

As shown in [Table 1], for Examples 1 to 7 in which the maximum distance T between the base end of the filament and the back surface of the head base portion was 2.0 mm or more and 4.5 mm or less, and L2/L1, which is the ratio of the maximum length L2 of the insertion hole to the maximum length L1 of the head base portion, was 0.30 or more and 0.70 or less, good results were obtained in all of the moldability of the filament, the difficulty of bending the brush molded body, and the ease of brushing the entire oral cavity.

On the other hand, for Comparative Example 1 in which L2/L1, which is the ratio of the maximum length L2 of the insertion hole to the maximum length L1 of the head base portion, was less than 0.30, a good result was not obtained regarding the difficulty of bending the brush molded body. In addition, for Comparative Example 2 in which L2/L1, which is the ratio of the maximum length L2 of the insertion hole to the maximum length L1 of the head base portion exceeded 0.70, a good result regarding the moldability of the filament was not obtained.

In addition, for Examples 4 and 5 in which L3/L1, which is the ratio of the maximum length L3 of the thin-wall region to the maximum length L1 of the head base portion, was less than 40%, good results as in Example 1 were not obtained regarding the moldability of the filament and the ease of brushing the entire oral cavity.

In addition, for Example 6 in which the center position LC of the depression with the distal end of the insertion portion as an origin was less than 3 mm, and the ratio LC/L12 (LC/L2), which is the ratio of the position LC of the depression to the maximum length L12 (maximum length L2 of the insertion hole) of the insertion portion 12 in the insertion direction was less than 30%, and Example 7 in which the center position LC of the depression with the distal end of the insertion portion as an origin exceeded 7 mm, and the ratio LC/L12 (LC/L2), which is the ratio of the position LC of the depression to the maximum length L12 (maximum length L2 of the insertion hole) of the insertion portion 12 in the insertion direction was 70% or more, good results as in Example 1 were not obtained regarding the moldability of the filament.

In addition, for Comparative Example 1 in which the difference between the maximum length L1 of the head base portion and the maximum length L2 of the insertion hole, which is represented by L1 - L2, exceeded 15 mm, a good result regarding the difficulty of bending the brush molded body was not obtained, as well as a good result regarding the ease of brushing the entire oral cavity as in Example 1 was not obtained.

In the above, the preferred embodiment according to the present disclosure has been described with reference to the accompanying drawings, but it is needless to say that the present invention is not limited to such an embodiment. The various shapes, combinations, or the like of the individual constituent members described in the embodiment described above are exemplary examples.

For example, in the embodiment described above, the configuration in which the upper surface 21a forming the outer contour (outermost circumference) in the head base portion 21 is flush with the base end of the filament 23 and the filament 23 protrudes from the upper surface 21a has been described as an exemplary example, but the present invention is not limited to this configuration.

For example, a configuration may be adopted in which a foundation portion that is positioned on the inside of the outer contour in the head base portion 21 and protrudes from the upper surface 21a at a certain thickness is provided on the upper surface 21a, and the filament 23 protrudes from an upper surface of the foundation portion instead of the upper surface 21a (the upper surface of the foundation portion is flush with the base end of the filament 23). In this case, since the brush molded body 20 becomes thicker by the thickness of the foundation portion, it is preferable that the upper surface 21a serving as the parting surface PL be flush with the base end of the filament 23. In a case in which the foundation portion is not provided, the fluidity of the resin is lower than that in a case in which the foundation portion is provided, so that the action of the present invention is more remarkable.

In addition, in the embodiment described above, the configuration in which the handle body 10 is made of the hard resin has been described as an exemplary example, the present invention is not limited to this configuration, and for example, a configuration may be adopted in which a part (handle portion 10 and the like) of the handle body 10 is coated with the soft resin. In a case in which this configuration is adopted, the decorativeness and the grip property can be improved.

### [Industrial Applicability]

It is possible to apply the present invention to the toothbrush.

### [Reference Signs List]

1: Toothbrush
10: Handle body
11: Handle portion
12: Insertion portion
15: Depression
20: Brush molded body
21: Head base portion
21a: Upper surface (parting surface)
21c: Back surface
21d: Thin-wall region
22: Insertion hole
23: Filament
35: Protrusion

## Claims

1. A toothbrush (1) comprising:
a handle body (10) made of a hard resin; and
a brush molded body (20) made of a soft resin and provided on a distal end side of the handle body (10),
wherein
the handle body (10) has an insertion portion (12) provided to protrude to the distal end side,
the brush molded body (20) has a head base portion (21) and a filament (23) configured to protrude to a front surface side of the head base portion (21),
the head base portion (21) has an insertion hole (22) into which the insertion portion (12) is inserted and fitted,
the brush molded body (20) has a maximum distance between a base end of the filament (23) and a back surface (21c) of the head base portion (21) of 2.0 mm or more and 4.5 mm or less, and
when a maximum length of the head base portion (21) in an insertion direction is defined as L1 and a maximum length of the insertion hole (22) in the insertion direction is defined as L2, a ratio of the maximum length of the insertion hole (22) to the maximum length of the head base portion (21), which is represented by L2/L1, is 0.30,
wherein the head base portion (21) has a thin-wall region (21d) in which the distal end side of the back surface (21c) is gradually inclined to the front surface side to be gradually thinner toward the distal end side, and
a maximum length of the thin-wall region (21d) in the insertion direction is 40% or more of the maximum length of the head base portion (21) in the insertion direction,
wherein a minimum thickness of the head base portion (21) is 1.0 to 2.5 mm, and
wherein a minimum distance (S) between the base end of the filament (23) positioned on the most distal end side and the back surface (21c) of the head base portion (21) is 1.5 mm to 3.0 mm.

2. The toothbrush (1) according to Claim 1,
wherein a distance between an end portion of the insertion hole (22) on the distal end side and an end portion of the head base portion (21) on the distal end side, which is represented by L1 - L2, is 5 mm or more and 15 mm or less.

3. The toothbrush (1) according to any one of Claims 1 or 2,
wherein the insertion portion (12) has at least one or more depressions (15), which are inwardly concave, at an edge in a direction orthogonal to a protrusion direction of the filament (23), and
the head base portion (21) has a protrusion (35) at a position at which the head base portion (21) is fitted into the depressions (15) when the insertion portion (12) is inserted into the insertion hole (22).

4. The toothbrush (1) according to Claim 3,
wherein the depressions (15) is provided at an edge in a width direction orthogonal to the protrusion direction of the filament (23) and the insertion direction, and is positioned on a rear end side with a distal end of the insertion portion (12) in the insertion direction as an origin in a range of 30% or more and 70% or less of the maximum length of the insertion portion (12) in the insertion direction.

5. The toothbrush (1) according to any one of Claims 1 to 4,
wherein the soft resin is polyurethane.

6. The toothbrush (1) according to any one of Claims 1 to 5,
wherein, with respect to a protrusion direction of the filament (23), a position of the base end of the filament (23) is the same as a position of a parting surface of the brush molded body (20).

7. The toothbrush (1) according to any one of Claims 1 to 6,
wherein a thickness of the head base portion (21) between an upper surface (21a) of the front side of the head base portion (21) and a surface of the insertion hole (22) on the upper surface (21a) side is 0.5 mm to 2.0 mm.

8. The toothbrush (1) according to any one of Claims 1 to 7,
wherein the head base portion (21) has a gate mark at the distal end of the head base portion (21).

## Patentansprüche

1. Zahnbürste (1), umfassend:
einen Griffkörper (10), der aus einem hartem Harz hergestellt ist; und
einen Bürstenformkörper (20), der aus einem weichen Harz hergestellt ist und an einer distalen Endseite des Griffkörpers (10) vorgesehen ist, wobei
der Griffkörper (10) einen Einsteckabschnitt (12) aufweist, welcher derart vorgesehen ist, dass er zur distalen Endseite hin hervorsteht.
der Bürstenformkörper (20) einen Kopfbasisabschnitt (21) sowie ein Filament (23) aufweist, welches dafür ausgelegt ist, auf einer Vorderflächenseite des Kopfbasisabschnitts (21) hervorzustehen,
der Kopfbasisabschnitt (21) eine Einstecköffnung (22) hat, in welche der Einsteckabschnitt (12) eingesteckt und eingepasst wird,
der Bürstenformkörper (20) einen maximalen Abstand zwischen einem Basisende des Filaments (23) und einer Rückfläche (21c) des Kopfbasisabschnitts (21) hat, der mindestens 2,0 mm und höchstens 4,5 mm beträgt, und,
wenn die maximale Länge des Kopfbasisabschnitts (21) in der Einsteckrichtung als L1 und die maximale Länge der Einstecköffnung (22) in der Einsteckrichtung als L2 definiert ist, das Verhältnis der maximalen Länge der Einstecköffnung (22) zur maximalen Länge des Kopfbasisabschnitts (21), welches durch L2/L1 dargestellt wird, 0,30 beträgt,
wobei der Kopfbasisabschnitt (21) einen dünnwandigen Bereich (21d) aufweist, in welchem die distale Endseite der Rückfläche (21c) sich allmählich zur Vorderflächenseite hin neigt, sodass sie zur distalen Endseite hin allmählich dünner wird, und
die maximale Länge des dünnwandigen Bereichs (21d) in der Einsteckrichtung mindestens 40 % der maximalen Länge des Kopfbasisbereichs (21) in der Einsteckrichtung ausmacht,
wobei die minimale Dicke des Kopfbasisabschnitts (21) 1,0 bis 2,5 mm beträgt, und
wobei der minimale Abstand (S) zwischen dem Basisende des Filaments (23), welches an der äußersten distalen Endseite angeordnet ist, und der Rückfläche (21c) des Kopfbasisabschnitts (21) 1,5 mm bis 3,0 mm beträgt.

2. Zahnbürste (1) gemäß Anspruch 1,
wobei der Abstand zwischen einem Endabschnitt der Einstecköffnung (22) auf der distalen Endseite und einem Endabschnitt des Kopfbasisabschnitts (21) auf der distalen Endseite, welcher durch L1 - L2 dargestellt wird, mindestens 5 mm und höchstens 15 mm beträgt.

3. Zahnbürste (1) gemäß einem beliebigen der Ansprüche 1 oder 2,
wobei der Einsteckabschnitt (12) mindestens eine oder mehrere Vertiefungen (15) aufweist, die nach innen hin konkav sind, wobei sie sich an einer Kante in einer Richtung befinden, die rechtwinklig zur Richtung ist, in welcher das Filament (23) vorsteht, und
der Kopfbasisabschnitt (21) hat einen Überstand (35) an einer Stelle aufweist, an welcher der Kopfbasisabschnitt (21) in die Vertiefungen (15) eingepasst wird, wenn der Einsteckabschnitt (12) in die Einstecköffnung (22) eingesteckt wird.

4. Zahnbürste (1) gemäß Anspruch 3,
wobei die Vertiefungen (15) an einer Kante in einer Breitenrichtung vorgesehen sind, welche rechtwinklig zur Richtung, in der das Filament (23) hervorsteht, und zur Einsteckrichtung ist, und an einer hinteren Endseite angeordnet sind, wobei ein distales Ende des Einsteckabschnitts (12) in der Einsteckrichtung als Ursprung in einem Bereich von mindestens 30 % und höchstens 70 % der maximalen Länge des Einsteckabschnitts (12) in der Einsteckrichtung dient.

5. Zahnbürste (1) gemäß einem beliebigen der Ansprüche 1 bis 4,
wobei es sich bei dem weichen Harz um Polyurethan handelt.

6. Zahnbürste (1) gemäß einem beliebigen der Ansprüche 1 bis 5,
wobei unter Bezugnahme auf die Richtung, in der das Filament (23) vorsteht, die Position des Basisendes des Filaments (23) mit der Position einer Scheidefläche des Bürstenformkörpers (20) identisch ist.

7. Zahnbürste (1) gemäß einem beliebigen der Ansprüche 1 bis 6,
wobei die Dicke des Kopfbasisabschnitts (21) zwischen einer oberen Fläche (21a) der Vorderseite des Kopfbasisabschnitts (21) und einer Fläche der Einstecköffnung (22) auf der Seite der oberen Fläche (21a) 0,5 mm bis 2,0 mm beträgt.

8. Zahnbürste (1) gemäß einem beliebigen der Ansprüche 1 bis 7,
wobei der Kopfbasisabschnitt (21) am distalen Ende des Kopfbasisabschnitts (21) eine Gussnarbe aufweist.

## Revendications

1. Brosse à dents (1), comprenant :
un corps de manche (10) réalisée en une résine dure ; et
un corps moulé de brosse (20) constitué d'une résine souple et prévu sur un côté d'extrémité distal du corps de manche (10), dans laquelle
le corps de manche (10) présente une partie d'insertion (12) prévue pour faire saillie vers le côté d'extrémité distal,
le corps moulé de brosse (20) présente une partie de base de tête (21) et un filament (23) configuré pour faire saillie vers un côté de surface avant de la partie de base de tête (21),
la partie de base de tête (21) présente un trou d'insertion (22) dans laquelle la partie d'insertion (12) est insérée et ajustée,
le corps moulé de brosse (20) présente une distance maximale entre une extrémité de base du filament (23) et une surface arrière (21c) de la partie de base de tête (21) de 2,0 mm ou plus et de 4,5 mm ou moins, et
lorsqu'une longueur maximale de la partie de base de tête (21) dans une direction d'insertion est définie comme L1 et une longueur maximale du trou d'insertion (22) dans la direction d'insertion est définie comme L2, un rapport de la longueur maximale du trou d'insertion (22) à la longueur maximale de la partie de base de tête (21), qui est représentée par L2/L1, est de 0,30,
dans laquelle la partie de base de tête (21) présente une région de paroi mince (21d) dans laquelle le côté d'extrémité distal de la surface arrière (21c) est progressivement incliné vers le côté de surface avant pour être progressivement plus mince vers le côté d'extrémité distal, et
une longueur maximale de la région de paroi mince (21d) dans la direction d'insertion est de 40 % ou plus de la longueur maximale de la partie de base de tête (21) dans la direction d'insertion,
dans laquelle une épaisseur minimale de la partie de base de tête (21) est de 1,0 à 2,5 mm, et
dans laquelle une distance minimale (S) entre l'extrémité de base du filament (23) positionnée sur le côté d'extrémité le plus distal et la surface arrière (21c) de la partie de base de tête (21) est de 1,5 mm à 3,0 mm.

2. Brosse à dents (1) selon la revendication 1,
dans laquelle une distance entre une partie d'extrémité du trou d'insertion (22) sur le côté d'extrémité distal et une partie d'extrémité de la partie de base de tête (21) sur le côté d'extrémité distal, qui est représentée par L1 - L2, est de 5 mm ou plus et de 15 mm ou moins.

3. Brosse à dents (1) selon l'une quelconque des revendications 1 ou 2,
dans laquelle la partie d'insertion (12) présente au moins un ou plusieurs enfoncements (15), qui sont concaves vers l'intérieur, au niveau d'un bord dans une direction orthogonale à une direction de saillie du filament (23), et
la partie de base de tête (21) présente une saillie (35) au niveau d'une position dans laquelle la partie de base de tête (21) est ajustée dans les enfoncements (15) lorsque la partie d'insertion (12) est insérée dans le trou d'insertion (22).

4. Brosse à dents (1) selon la revendication 3,
dans laquelle les enfoncements (15) sont prévus au niveau d'un bord dans une direction de largeur orthogonale à la direction de saillie du filament (23) et à la direction d'insertion, et sont positionnées sur un côté d'extrémité arrière avec une extrémité distale de la partie d'insertion (12) dans la direction d'insertion en tant qu'origine dans une plage de 30 % ou plus et de 70 % ou moins de la longueur maximale de la partie d'insertion (12) dans la direction d'insertion.

5. Brosse à dents (1) selon l'une quelconque des revendications 1 à 4,
dans laquelle la résine souple est du polyuréthane.

6. Brosse à dents (1) selon l'une quelconque des revendications 1 à 5,
dans laquelle, par rapport à une direction de saillie du filament (23), une position de l'extrémité de base du filament (23) est la même qu'une position d'une surface de séparation du corps moulé en brosse (20).

7. Brosse à dents (1) selon l'une quelconque des revendications 1 à 6,
dans laquelle une épaisseur de la partie de base de tête (21) entre une surface supérieure (21a) du côté avant de la partie de base de tête (21) et une surface du trou d'insertion (22) du côté de la surface supérieure (21a) est de 0,5 mm à 2,0 mm.

8. Brosse à dents (1) selon l'une quelconque des revendications 1 à 7,
dans laquelle la partie de base de tête (21) présente une marque de grille au niveau de l'extrémité distale de la partie de base de tête (21).
